Europäisches Patentamt

European Patent Office

Office européen des brevets

(19)

(11) **EP 1 189 464 A2**

(12) ## EUROPEAN PATENT APPLICATION

(43) Date of publication:
**20.03.2002  Bulletin 2002/12**

(51) Int Cl.⁷: **H04Q 7/24**

(21) Application number: **01121955.7**

(22) Date of filing: **12.09.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Gerkis, Anthony N.**<br>**North York, Ontario (CA)**<br>• **Aitkenhead, Gary John**<br>**Bramly, Hampshire RG26 5QF (GB)** |
| (30) Priority: **15.09.2000  GB 0022816** | (74) Representative: **Treleven, Colin et al**<br>**Motorola European Intellectual Property Operations,**<br>**Midpoint,**<br>**Alencon Link**<br>**Basingstoke, Hampshire RG21 7PL (GB)** |
| (71) Applicant: **MOTOROLA, INC.**<br>**Schaumburg, IL 60196 (US)** | |

(54)    **Communication system and method for delivering control signalling and/or data messages**

(57)    A communication system (10, 162) for delivering control signalling and/or data messages comprising a plurality of base transceiver stations (22-32) providing communication links to a plurality of mobile stations (12-16). The communications system (10, 162) includes a processor (72) for receiving at least one control signalling and/or data message to be forwarded to at least one addressed mobile station. The processor (72) determines a characteristic of the control signalling and/or data message to be delivered and selects a delivery mechanism for delivering the at least one control signalling and/or data message based on said characteristic. A base transceiver station, dispatcher station and method of delivering at least one control signalling and/or data message are also provided.

This provides a high capacity network (one with location area management) with a greater subscriber capacity than prior art networks. It also minimises the impact on the network equipment (DAP) to ensure that the service provider may not experience a reduction in subscriber handling capacity. It also minimises the processor and/or air interface resources needed to deliver the message.

FIG.3

EP 1 189 464 A2

**Description**

Field of the Invention

This invention relates to delivering control signalling messages in communications systems. In particular, but not exclusively, the invention relates to the efficient delivery of control signalling messages, preferably short data messages, in point to multi-point or point-to-point wireless communications systems.

Background of the Invention

Wireless communications systems, for example cellular telephony or private mobile radio communications systems, typically provide for radio telecommunication links to be arranged between a plurality of base transceiver stations (BTSs) and a plurality of subscriber units, often termed mobile stations (MSs). The term mobile station generally includes both hand-portable and vehicular mounted radio units.

Wireless communications systems are distinguished over fixed communications systems, such as the public switched telephone networks (PSTN), principally in that mobile stations move between service providers (and/or different BTS) and in doing so encounter varying radio propagation environments.

In a wireless communications system, each BTS has associated with it a particular geographical coverage area (or cell). The coverage area defines a particular range that the BTS can maintain acceptable communications with MSs operating in its serving cell. Often these cells combine to produce an expanded system coverage area. Furthermore, cells are often grouped into location areas for the purposes of tracking a MS within the coverage area whilst minimising location-updating signalling.

The communication link from a BTS to a MS is generally referred to as a down-link channel. Conversely, the communication link from a MS to a BTS is generally referred to as an up-link channel.

Multiple access techniques permit simultaneous transmissions from several MS to a single BTS over a plurality of communications channels. Some channels are used for carrying traffic whilst other channels (which may be logical or dedicated channels) are used for transferring control information, such as call paging, between the base transceiver stations and subscriber units. Examples of multiple access techniques include: frequency division multiple access (FDMA), time division multiplexing/ multiple access (TDM, TDMA) and code division multiple access (CDMA).

In the field of this invention it is known that mobile switching networks invoke services to a MS by locating the MS within the communication network. Such location determining is performed by a location management function, typically positioned in the infrastructure, distal from the wireless communications units.

A dispatcher station is generally used to send short data messages to a MS or group of MSs. A dispatcher station may be any fixed network access point for data communication systems connected via wire-line to a dispatch application processor (DAP), or mobile and connected via the air interface. The dispatcher may also simply be a fixed host end-user application that uses the short data bearer services for initiated message transfer.

Paging is a common mechanism for invoking a service, for example it is used to deliver short messages in the Global System for Mobile communications (GSM) cellular mobile telephony standard (see TS 100 901 V.6.1.0 (1998-07) Technical Specification Digital cellular telecommunications system (Phase 2+); Technical realization of the Short Message Service (SMS); Point-to-Point (PP) (GSM 03.40 version 6.1.0 Release 1997)).

Implementing a paging mechanism (as per the GSM services) is expensive from two perspectives: air interface bandwidth and CPU loading of the network elements that provide the service. It is noteworthy that the GSM network does not offer "group" related services, as in the vein of private mobile radio systems, as cellular communication services are directed towards MS-BTS point-to-point communications.

One such service that generally uses MS location information is the provision of addressed *individual* data messages. There are two known prior art approaches used for delivering *individually-*addressed messages, namely by either:

  (i) tracking the location of a MS or group of MSs between groups of cells (location areas) and paging the MS(s) to determine the specific cell/ location of an addressed MS within a location area so that the SDS message(s) can be delivered, as in the aforementioned GSM approach; or
  (ii) "flooding" all cells within a location area a short data message so that all MSs can receive, but not necessarily decode, the SDS transmission.

One such system that adopts this second "flooding" approach is the Motorola integrated digital enhanced network (iDEN)™. In this system, the data (status messages) to be transmitted to the MSs is of a minimal amount, and of a fixed data-transmission length, and so the data is sent to all cells in the location area for delivery. This system re-uses the paging mechanism by embedding the small data payload in the paging message. In essence, this is equivalent to flooding.

For services that provide short data or message delivery, the aforementioned approaches are used in accordance with the location management scheme of the network.

However, this approach has the disadvantage that for wireless networks that use the concept of location areas for location management of mobile subscribers, there is no efficient means of delivering short data messages, namely application data messages transmitted on control signalling channels. In particular, there is no efficient means of delivering short data messages to groups of users.

US patent number US 5,896,376 titled "Optimal use of logical channels within a mobile telecommunications network" provides means of queuing data. Furthermore, US patent number US 5,729,544, titled "Method for transmitting data packets based on message type" provides a means of packet based transfer of data. However, the above US patents fail to provide a method and system for short data delivery, particularly for bandwidth-efficient and processing-efficient group short data delivery.

In summary, network architectures that do offer group addressed short data services, require their network to track the mobile subscribers to the individual cells. This technique requires substantial amounts of data to be communicated throughout the network, to track such mobile subscribers, and is therefore bandwidth and signalling hungry.

In the alternative, a communication system "floods" all MSs with all short data messages. In such a case, there is no need to provide for additional paging procedures to identify selected recipients of the short data message (s), but there is, of course, excess and wasteful signalling and traffic transmission in the system.

Thus there is a need to provide a method and system for short data delivery, particularly for bandwidth-efficient group short data delivery, wherein the aforementioned delivery mechanism disadvantages may be alleviated.

Other prior art patent applications known to the applicant are US-A-5392452 and US-A-5822700.

<u>Statement of Invention</u>

In accordance with a first aspect of the present invention there is provided a communication system for control signalling message delivery, as claimed in claim 1.

In accordance with a second aspect of the present invention there is provided a base transceiver station adapted to operate in the communication system, as claimed in claim 1.

In accordance with a third aspect of the present invention there is provided a mobile or fixed dispatcher station adapted to operate in the communication system, as claimed in claim 1.

In accordance with a fourth aspect of the present invention there is provided a method delivering at least one control signalling message in a communication system, as claimed in claim 17.

<u>Brief Description of the Drawings</u>

Exemplary embodiments of the present invention will now be described, with reference to the accompanying drawings, in which:

FIG. 1 shows a block diagram of a trunked radio communications system that can be adapted to support the various inventive concepts of a preferred embodiment of the present invention;

FIG. 2 shows two preferred delivery mechanisms for delivering at least one short data message to an intended recipient in the communications system in accordance with a first embodiment of the present invention;

FIG. 3 shows two preferred delivery mechanisms for delivering at least one short data message to an intended recipient in the communications system in accordance with a second embodiment of the present invention;

FIG. 4 shows the conventional cell plan of a trunked radio communications system that can be adapted to support the various inventive concepts of a preferred embodiment of the present invention;

FIG. 5 shows a process flow diagram for a group short data decision and delivery implementation in accordance with a preferred embodiment of the present invention;

FIG. 6 shows a process flow diagram for a page and delivery implementation in accordance with a preferred embodiment of the present invention; and

FIG. 7 shows a process flow diagram for a page decision mechanism in accordance with a preferred embodiment of the present invention.

Description of Preferred Embodiments

A preferred embodiment of the present invention proposes that the most efficient means of group or individual signalling and/or data message delivery will be to adaptively switch between a delivery mechanism that pages the location areas for group members, and a mechanism that simply floods the location area with the short data message. For clarity purposes only, the remainder of the description uses the term "control signalling" that encompass data messages as known to those skilled in the art, particularly, if not explicitly referred to as such, short data messages.

The method described here minimises the loading of the application processor, control channel loading, and frame relay network traffic. As a result, it provides a short data message delivery service with minimal additional impact on the network. Less network impact results in less customer cost by requiring a minimal amount of additional equipment and/or bandwidth for the system provider.

For networks which use the concept of location areas, this invention proposes to use either:

(i) a page and deliver mechanism for short data service (SDS) message transmissions, or
(ii) a location area flooding delivery.

The decision on which mechanism to use is based on several criteria, such as: short data message size, page message size, page response size and/or a statistical measure of the probability that cells are occupied by group members, and/or the current CPU loading of the network element responsible for delivery.

This method is a unique variation of the location area location management scheme for this service. The preferred embodiment is described in relation to the TETRA standard, which does not define such network behavior. In general due to the location area management scheme, the preferred embodiment of the present invention offers a better network response time for a larger/high capacity subscriber base, as a result of more efficient message delivery.

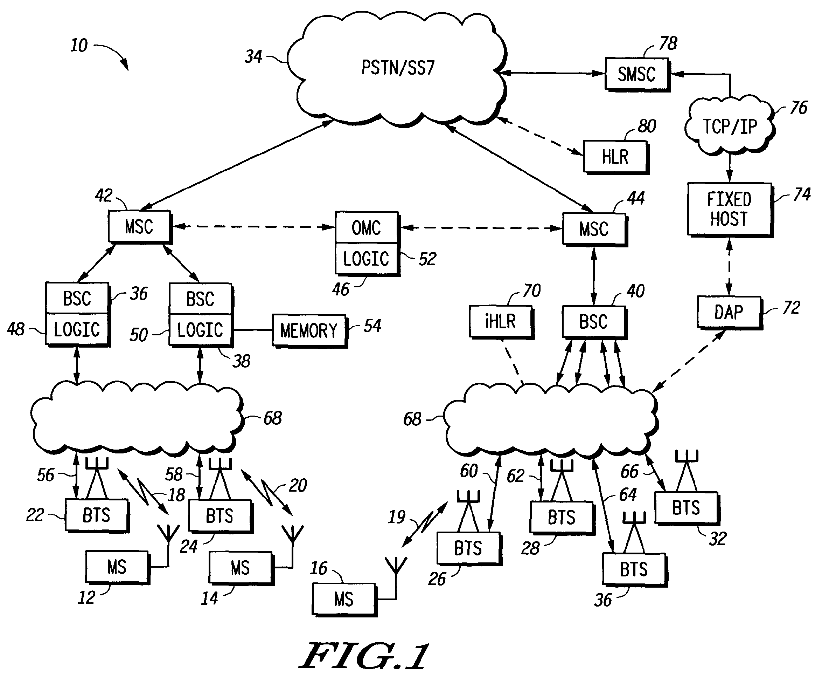

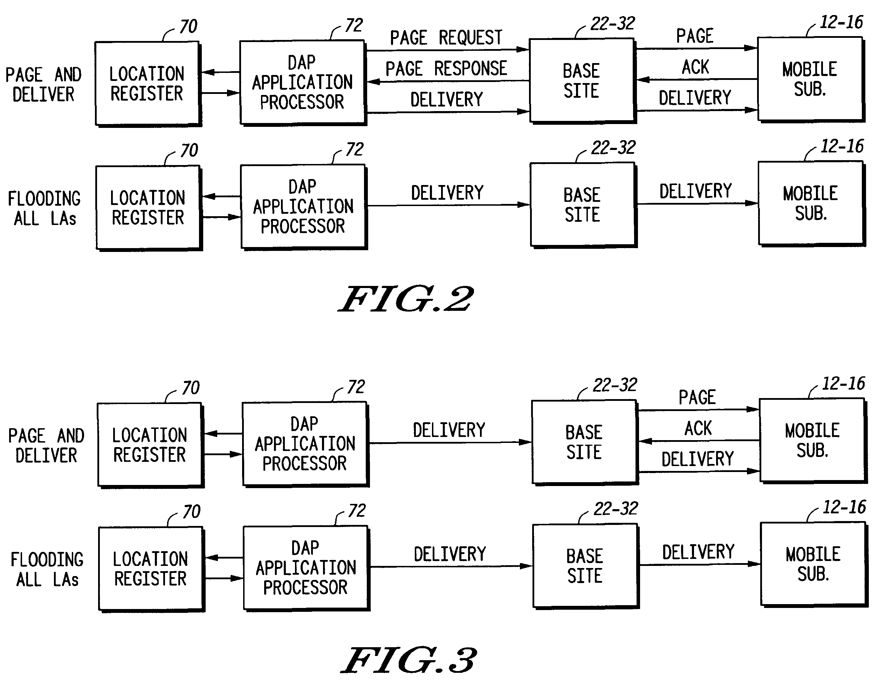

FIG. 1 shows, in outline, a trunked radio communications system 10 supporting a TErrestrial Trunked RAdio (TETRA) air-interface in accordance with a preferred embodiment of the invention. The TETRA air interface has been defined by the European Telecommunications Standards Institute (ETSI). Generally, the air-interface protocol is administered from base sites that are geographically spaced apart - one base site supporting a cell (or, for example, sectors of a cell) as shown in FIG. 2).

A plurality of subscriber units, such as a mixture of MSs 12-16 and fixed terminals (not shown), communicate over the selected air-interface 18-20 with a plurality of base transceiver stations (BTS) 22-32. A limited number of MSs 12-16 and BTSs 22-32 are shown for clarity purposes only. The BTSs 22-32 may be connected to a conventional public-switched telephone network (PSTN) 34 through base station controllers (BSCs) 36-40 and mobile switching centres (MSCs) 42, 44.

Each BTS 22-32 is principally designed to serve its primary cell, with each BTS 22-32 containing one or more transceivers. The BTSs 22-32 communicate 56-66 with the rest of the trunking system infrastructure via a frame relay interface 68. In general, the iHLR function 70 communicates directly with the DAP. The iHLR function 70 is the database for all subscribers with respect to dispatch services.

Each BSC 36-40 may control one or more BTSs 22-32, with BSCs 36-40 generally interconnected through MSCs 42, 44. Each BSC 36-40 is therefore able to communicate with one another, if desired, to pass system administration information therebetween, with BSCs 36-40 responsible for establishing and maintaining control channel and traffic channels to serviceable MSs 12-16 affiliated therewith.
The interconnection of BSCs 36-40 therefore allows the trunked radio communication system to support handover of the MSs 12-16 between cells.

Each MSC 42, 44 provides a gateway to the PSTN 34, with MSCs 42, 44 interconnected through an operations and management centre (OMC) 46 that administers general control of the trunked radio system 10, as will be understood by those skilled in the art. The various system elements, such as BSCs 36-38 and OMC 46, will include control logic 48, 50, 52, with the various system elements usually having associated memory 54 (shown only in relation to BSC 38 for the sake of clarity). The memory typically stores historically compiled operational data as well as in-call data, system information and control algorithms.

In addition to the connections to the PSTN 34 (or SS7 in a cellular network), the MSs 12-16 and BTS 22-32 can obtain system specific information via the dispatch application processor (DAP) 72. The DAP 72 is the dispatch primary control network element, which, amongst other functions, manages the services, provisioning, location management and billing of dispatch-type services.

The DAP 72 may be connected to a fixed host 74 that provides many application-specific functions to the trunking network. The fixed host, in the context of the preferred embodiment of the present invention, is any TCP/IP based application that can send or receive short data messages, namely providing a fixed wire-line access point for group SDS messages.

The fixed host 74 is connected to a short message service centre (SMSC) 78 via a transfer control protocol (TCP)/internet protocol (IP) interface. The SMSC 78 is a standard piece of GSM equipment that is responsible for delivering point-to-point SDS messages within a cellular telecommunications environment. It is a database with SS7 protocol stacks layered upon it. The SMSC 78 is also connected to the PSTN 34, which is operably coupled to home location register (HLR) 80.

A short message typically constitutes an indication of the calling or called party of the message, with a protocol identifier, message reference number, (optionally) a timestamp, control parameters for reporting, and the actual user data payload itself. It may also potentially contain a control parameter to indicate the coding of the user data payload. It is within the contemplation of the invention that such short data messages may originate from either an MS or a fixed host.

In the context of the present invention, a location area management scheme locates MSs within the system. Preferably, short data messages are handled by the DAP 72 in a similar fashion to the handling of control traffic. The inventors of the present invention have recognised that DAP loading is proportional to the number of messages being processed by the DAP 72, and not a function of the short data payload size.

A preferred embodiment of the invention has adapted the path from the SMSC 78 to the MSs 12-16 in the delivery of short data messages, with an adaptive decision algorithm performed in the DAP 72. The adaptive decision algorithm includes a determination on whether an addressed MS should or should not be paged before delivery of the short data message.

In operation, an application processor in the DAP 72 will, upon receiving a group SDS submission message, perform the following actions:

> (i) Determine whether the message shall be delivered using a paging or flooding delivery mechanism based on a delivery mode algorithm as described with regard to FIG.s 4-6. The delivery mode algorithm would preferably include variables such as: data length of the SDS message, total number of sites that may need to be paged, and current application processor CPU loading.
>
> (ii) If the decision procedure in the application processor determines that no benefit is realised by initiating a paging process, the application processor shall initiate a SDS message delivery procedure to all sites in the location areas known to contain intended-recipient group members. The BTS 22-32, upon receiving a message to deliver, may still take the decision to page on the cell before delivering the message to the MS, based on message length and paging message criteria as well as cell loading or other factors.
>
> (iii) Otherwise, the application processor shall initiate paging procedures, and deliver the message to sites that return a paging response.

Turning now to FIG. 2, a message overview chart is shown, highlighting the different message procedures associated with the two short data message delivery options, controlled by DAP 72 and offered in steps (ii) and (iii).

FIG. 2 shows that in the "page and deliver" mechanism, the iHLR 70 receives a request from the application processor of the DAP 72, for location details of the MSs to be paged. The iHLR 70 provides the location information to the application processor, which sends the requisite page requests to the BTSs that correspond to the cells (sites/locations) indicated by the iHLR 70. The respective BTS(s) 22-32 page the MS(s) 12-16 and await a page acknowledgement, to indicate that the MS is awaiting its SDS message. The acknowledgement from the addressed MS is then relayed back to the application processor of the DAP 72 as a page response. Once a page response has been received, the application processor of the DAP 72 delivers the SDS message to the respective MS 12-16 via its serving BTS 22-32.

FIG. 2 also shows the SDS delivery mechanism for flooding all location areas with the short data message, if the application processor of the DAP 72 has determined that a paging method is not appropriate. The application processor of the DAP 72 requests details of the appropriate location areas for the intended recipients of the short data message. The iHLR 70 responds with details of these location areas.

Clearly, if the SDS message is to be sent to all sites, these two latter steps will not be required. The application processor of the DAP 72 will then deliver the SDS message to the respective BTS 22-32, for final delivery to the location areas associated with the MSs 12-16 who are the intended recipients.

An alternative embodiment of the present invention has adapted at least one of the BTS 22-32 to perform the adaptive decision algorithm in its respective application processor. The application processor is the central network element responsible for routing, provisioning and tracking MSs for this service.

One benefit associated with implementing the adaptive decision algorithm in a BTS 22-32, as compared to the DAP 72, includes minimising DAP loading due to the DAP 72 handling fewer messages. Such a reduction in message handling is readily shown when comparing FIG. 2 to FIG. 3, where the page request, page response and SDS delivery between the DAP 72 and the BTS 22-32 is no longer required.

Turning now to FIG. 3, a message overview chart is shown, highlighting the different message procedures associated with the two short data message delivery options, controlled by at least one of the BTSs 22-32 and offered in steps (ii) and (iii).

FIG. 3 shows that in the "page and deliver" mechanism, the DAP 72 delivers a message to the application processor of a BTS 22-32. The respective BTS(s) 22-32 decide locally, based on its/their own criteria, whether to page and deliver, or just deliver, the message to an addressed MS 12-16. If the decision is to page and deliver, the BTS 22-32 pages the MS(s) 12-16 and awaits a page acknowledgement, to indicate that the MS is awaiting its SDS message. Once a page response has been received, the application processor of the BTS 22-32 delivers the SDS message to the respective MS 12-16.

FIG. 3 also shows the SDS delivery mechanism for flooding all location areas with the short data message, if the application processor of the BTS 22-32 has determined that a paging method is not appropriate. In this case, the application processor of the BTS(s) 22-32 will then deliver the SDS message directly to the MSs 12-16 who are the intended recipients within its serving location area.

It is worth noting that by implementing the decision algorithm in the BTS 22-32, the BTS is able to adaptively choose to page, and is thereby in a better position to manage and distribute its own computational effort and message handling. The loading of the DAP 72 is proportional to the number of messages sent, regardless of their size. Therefore, it is preferable to always flood to all BTSs 22-32, and have the BTSs 22-32 decide whether to page or "flood" the site, as in this second embodiment described with reference to FIG. 3, if the BTS(s) 22-32 have this capability.

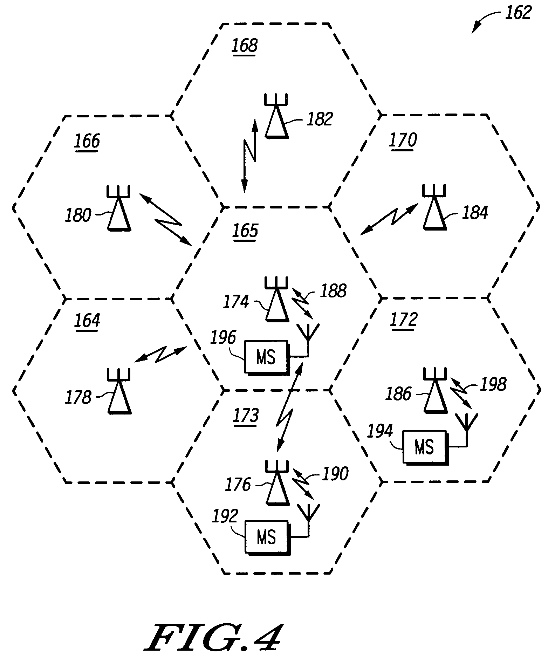

The general architecture of the preferred embodiment of the invention of FIG. 1 is described in further detail with reference to a honeycomb cell arrangement, as shown in FIG. 4.

FIG. 4 shows a conventional cell plan 162 containing interconnected cell areas 164-173. Each cell area has a base station sub-system (BSS) 174-186 with MSs 192-196 respectively affiliated therewith. Communication links 188, 190 and 198 connect the base station sub-systems and mobile stations.

Generally, as will be understood by persons skilled in the art, an MS is in communication with its nearest BTS (which together with the BSC forms the BSS); this is shown in relation to BSS 174 and mobile station 196 of cell 165.

However, in accordance with the present invention, the BTS 174 (or DAP not shown) selectively pages MS 196, in order to subsequently transmit an addressed SDS message. The DAP 72 delivers group short data messages to all sites in the dispatch location areas known to contain intended-recipient MSs 12-16. The DAP 72 would adaptively decide to page one or more particular cells based on a number of criteria such as data length or control channel loading.

Alternatively, if it was determined that MS 196 was not to be paged, the SDS message may be broadcast in either one or more cells, as shown with regard to transmissions 190 and 198 respectively broadcast from BTSs 176 and 186 to, at least, MSs 192 and 194.

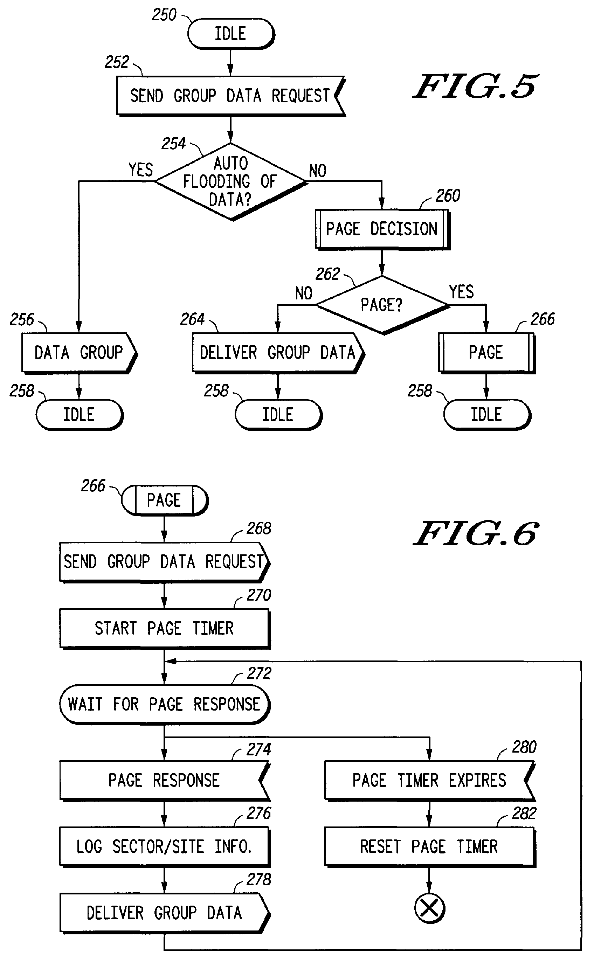

Turning now to FIG. 5, a process flow diagram for the preferred group data decision and delivery implementation is shown. In the preferred embodiment of the invention, the decision and delivery mechanism is described with respect to short data messages.

However, it is within the contemplation of the invention that the transmission of other group or individual control signalling messages can be supported by the inventive concepts described herein. For purposes of clarity only, the term control signalling is generically used throughout the remaining description to encompass at least general signalling traffic as well as data messages, including short data messages.

With regard to SDS transmissions, the system starts from an idle mode as shown in step 250. Once a group data request has been made, as in step 252, the network may choose to automatically invoke the flooding delivery mechanism for certain types of short data, in determination step 254.

For example, if a message type is known to have a fixed data length that is comparable to the message used for the paging mechanism, no benefit would ever be realized by paging and subsequently delivering. Alternatively, if the network operator wanted to sacrifice air interface resource utilization for speed of delivery, messages that can be transmitted entirely within a single (or configurable number of) air-interface timeslot(s) would automatically use flooding.

If automatic flooding is selected at this point, the group data message is delivered, as shown in step 256, prior to the network returning to an idle mode of operation with regard to SDS messages as shown in step 258.

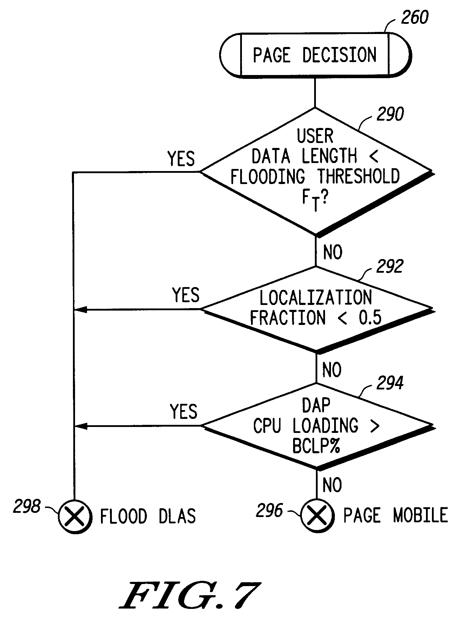

If the application processor determines that automatic flooding is not to occur in step 254, a decision is made as to whether to page or not, as shown in step 260. The page-decision process is described later with reference to FIG. 7.

Once a page-decision has been made in step 260, following the flowchart in FIG. 5, a decision is made on whether to page, for example one or more MSs, as shown in step 262. If at this point, the application processor determines that it is not appropriate to page (the one or more MSs), then the group data message is delivered, as shown in step 264, prior to the network returning to an idle mode of operation with regard to group data messages, as shown in step 258.

If a positive determination is made to page (the one or more MSs) in step 262, then the page process, as described with reference to FIG. 6 is initiated, at step 266, prior to the network returning to an idle mode of operation with regard to group data messages, as shown in step 258.

If a page (MS(s)) decision is made at steps 260 and 262 of FIG. 5, paging is performed in accordance with the flowchart of FIG. 6, in the preferred embodiment of the invention.

The page (MS) process starts at step 266 and a group data page request is transmitted from the application processor, as shown in step 268. If the application processor is positioned in the DAP, the group data page request is transmitted to the one or more respective BTS(s). At this point a page-timer function is initiated, as in step 270.

The application processor then waits for the group data page responses or page acknowledgements, as shown in step 272. If the application processor does not receive any page responses or page acknowledgements, then the page-timer function will extend beyond a pre-determined threshold limit, as in step 280. The page-timer is then reset, as shown in step 282. If the page timer is running in the BTS and it expires, it is assumed that the MS is not present and the SDS message is silently discarded. If the page timer is running in the DAP, subsequent page responses relating to the page are discarded and the DAP discards the group data message silently.

If the application processor does receive a page response(s) or page acknowledgement(s) in step 274, then the application processor logs the cell (site) information, passing the information to the HLR or iHLR, as in step 276.

The group short data message is then delivered, as shown in step 278.

If the intended recipients of the group data message had not responded with a page response(s) or page acknowledgement(s), then the group short data message is silently discarded and the application reverts to the waiting mode of step 272.

Therefore, for those group members that respond to the page request within the pre-determined time limit, the application processor will deliver the short data message.

It is within the contemplation of the invention, that different time limits can be set, dependent upon the importance/priority assigned to delivering individual or grouped group data message.

As highlighted earlier, the inventors of the present invention have recognised the benefits of weighing potential control channel capacity waste versus application processor CPU loading. The assumption made is that conserving control channel capacity shall be a higher priority than reducing application processor CPU loading. Thus, the algorithm may check multiple criteria in an attempt to send the message without paging, before a paging procedure is invoked.

FIG. 7 outlines the page-decision process that may be initiated at step 260 in FIG. 5. The first issue raised by the application processor is to query the location register for the location area containing the group members (not shown). If the intended group members are not contained within its geographical (cell) service area, no paging mechanism of flooding needs to be initiated.

Assuming that the intended recipients are, or may be, in the respective location area, the application processor assesses the short data message to ascertain whether a user data payload is below a "flooding threshold", $F_T$, as shown in step 290. If the user data payload is below the flooding threshold then the application processor delivers the message to all sites within the identified location areas (dispatch location areas).

In the preferred embodiment of the invention, $F_T$ has been calculated as follows:

$$F_T = \min[X_{SLOT}-X_{UD}, (X_P+X_{PR}+X_{DH}|_{max})-(X_{DH}|_{max}+X_{UD})] \tag{1}$$

where

$X_{SLOT}$ is the slot size,
$X_{UD}$ is the user data size,
$X_P$ is the infrastructure network page message size to the base site controller,
$X_{PR}$ is the page response size, and
$X_{DH}$ is the short data message delivery header size.

In other words, when the group data to be delivered is small, no benefit is realised from performing paging of the location areas. It is within the contemplation of the invention that criteria other than slot size, data size, or short data message delivery header size may be used to assess a threshold level, and that a user-definable "transition region" may be used to define the valid range for the flooding threshold. Furthermore, the threshold level may be either pre-defined or dynamically adapted in response to at least one network operating condition.

The qualitative interpretation of the above formula is as follows: the threshold for initiating flooding is the smaller of the maximum user data size that will fit into a downlink slot over the air interface, or the point at which the number of bytes of paging traffic (for example paging traffic includes at least one of: page message size and page response size) on the infrastructure network is in the order of the length of the user data itself.

If the user data payload is not below the flooding threshold in step 290, then the application processor computes a localisation fraction, as shown in step 292. If the localisation fraction, $X_L$ is less than say, 0.5 (or another operator configurable fraction), then the application processor delivers the message to all sites within the identified location areas.

In the preferred embodiment of the invention, $X_L$ has been calculated as follows:

$$X_L = N_{known}/N_{total} \tag{2}$$

where

$N_{total}$    is the total number of location areas (or total number of sites) in the selected service area, and
$N_{known}$    is the number of location areas (or the total number of sites within these location areas) known to contain a group member.

It is within the contemplation of the invention that a "middle region" may be used as a secondary criterion for flooding. If only a fraction of all possible sites or location areas within the network, or selected service area, contain group members, then there is a higher probability of group members being located in more sites within the location areas which are known to contain group members (group member density). In other words, the group members are likely to be "localised" to fewer sites, and the application processor should deliver to all sites within the selected location area(s) without paging.

This can be demonstrated by considering the "N mobiles distributed in R cells" probability problem, as is well known to those skilled in the art. A numerical analysis may include considering all valid partitions of N and applying the following formula from Abramovitz and Stegun (see Handbook of Mathematical Functions, Dover Publications Inc., New York standard book number 486-61272-4, ninth edition Dec 1972) to each distribution of the valid partitions.

For any given distribution of items, let $a_t$ denote the number of cells with exactly t mobiles. The probability of that particular distribution is:

$$P_R = \frac{N!R!}{R^N \cdot \prod_{t=0}^{N} (a_t)! (t!)^{a_t}} \tag{3}$$

If the localization fraction is not below the set threshold in step 292, then the application processor calculates a level of central processing unit (CPU) loading, or some other measure of application processor loading.

If this determination is above a pre-determined limit, as in step 294, then flooding all location areas is performed in order to minimise signalling degradation of other services. Such flooding is performed at the expense of control channel capacity and is done only if application processor loading is excessive. This is due to the application processor input/output (I/O) traffic being determined as the primary cause of CPU loading. If this determination is not above a pre-determined limit, as in step 294, then the MS(s) are paged, as shown in step 296.

It is noteworthy that in some networks and circumstances, the application processor loading may likely be proportional to control channel loading. However, this criterion should only be applied to prevent application processor failure or unsatisfactory response time degradation for other services.

It will be understood that the aforementioned method and system for bandwidth efficient group short data delivery provides at least the following advantages:

(i) Provides a high capacity network (one with location area (LA) management) with a greater subscriber capacity than currently available in prior art networks (operating with LA management).
(ii) Allows more optimal use of RF resources as well as wire-line bandwidth to minimise the impact on other services.
(iii) Minimises the impact on the network equipment, particularly the DAP, to ensure that the service provider may not experience a reduction in subscriber handling capacity.
(iv) Such a hybrid mechanism utilises selected advantageous features of alternative, previously perceived as incompatible, methods of short data message delivery, i.e. a location management system consistent with network or single cell arrangement with MSs tracked to individual cells.
(v) Recognises the differing requirements to handle, and accommodate for, fleet wide SDS delivery as compared to individual SDS delivery.
(vi) Allows network operators to serve more customers without needing to add additional site equipment, thereby providing more revenue for network operators whilst minimising any impact on cost.
(vii) With respect to the two alternatives for positioning the application processor, the DAP based decision algorithm solves the problem of minimising air interface resource usages. In addition, a BTS based solution solves the problem of minimising network element loading (i.e., DAP load) as well as air interface usage.

It is within the contemplation of the invention that the inventive concepts contained herein apply equally as well to individual short data messages as they do to the preferred group short data message delivery mechanism.

It is also within the contemplation of the invention that any communication system, such as cellular and distributed wire-line communications and not solely a trunking system as described, may benefit from the inventive concepts described herein.

It is also within the contemplation of the invention that the application processor can be positioned at any practicable location in the communication system architecture, such as a site controller, where the message delivery mechanism can be determined and, to some extent, controlled. The location selection of the DAP or BTS being merely a preferred location for the embodiment described.

It is also within the contemplation of the invention that the characteristic of the short data message, that is determined in order to select the most appropriate short data delivery mechanism, is not limited to the preferred parameters of: short data message length, total number of sites required to transmit short data message, current application processor loading, at least one page requirement, dynamic group number assignment, dynamic group number assignment message length, number of location areas and number of sites per location area.. A skilled person would readily recognise that any alternative characteristic that can be measured and assessed could be used to provide an intelligent and bandwidth-efficient delivery mechanism.

It is within the contemplation of the invention that another application for this mechanism could involve the delivery of control signalling (i.e. provisioning, or over-the-air configuration information) and/or data messages to an individual or, more importantly, a group of MSs for which it is desired that all group members' receive the same configuration information.

The inventive concepts described herein are also applicable to systems where control signalling messages could potentially vary in length. Such control signalling messages could include, for example, dynamic group number assignment that may have a variable message length depending on the amount of over-the-air programming information that is required/used.

The inventors of the present invention have recognised the benefits of avoiding tracking the MSs to individual cells, when designing a short data delivery system, in order to ease the impact on system processing. When the provision of short data messages is expanded to include "group" short data messages, a more intelligent delivery system is required that can cope with group communication. Paging all of the system with such group communication is inefficient.

Thus a method and system for bandwidth and processor-efficient delivery of group or individual control signalling messages, particularly short data messages, has been provided, that aims to alleviate at least some of the aforementioned prior art problems.

## Claims

1. A communication system (10, 162) for delivering control signalling messages, the communication system comprising a plurality of base transceiver stations (22-32) providing communication links to a plurality of mobile stations (12-16), the communications system (10, 162) having a processor (72) for receiving at least one control signalling message to be delivered to at least one addressed mobile station and **characterised by** the processor (72) determining a characteristic of the control signalling message to be delivered and selecting a delivery mechanism for forwarding the at least one control signalling message based on said characteristic.

2. The communication system in accordance with claim 1, further **characterised by** the at least one control signalling message being at least one individually or group-addressed short data message for delivery to one or more mobile stations.

3. The communication system in accordance with claim 1 or claim 2, further **characterised by** a location register (70, 80) operably coupled to the application processor to provide location information of intended recipients of the control signalling message to said application processor.

4. The communication system in accordance with claim 1, claim 2 or claim 3, wherein the delivery mechanism for delivering the at least one control signalling message includes at least one of the following: page and deliver, or deliver said at least one control signalling message directly in a number of location areas.

5. The communication system in accordance with claim 4, when dependent upon claim 3, wherein the deliver directly in a number of location areas mechanism is limited to selected location areas dependent upon location information provided by the location register (70, 80).

6. The communication system in accordance with any one of the preceding claims, wherein the application processor is provided in at least one of the plurality of base transceiver stations (22-32).

7. The communication system in accordance with any one of the preceding claims 1 to 5, wherein the communication system further comprises a dispatch application processor function operably coupled to at least one of said plurality of base transceiver stations (22-32), said application processor function including said application processor for delivering said control signalling messages via said at least one of the plurality of base transceiver stations (22-32).

8. The communication system in accordance with claim 7, wherein the dispatch application processor (72) either:

(i) pages cells within the location area prior to delivering the control signalling message to those cells where an addressed MS is located; or
(ii) delivers the control signalling message to all cells in at least one location area and at least one respective base transceiver station (22-32) determines

(a) whether to deliver the addressed control signalling message to at least one mobile station (12-16) without paging or
(b) whether to page locally for said at least one mobile station (12-16) before delivering said control signalling message.

9. The communication system in accordance with any one of the preceding claims, wherein the communication system operates a location area management function and is a wireless point-to-multipoint and/or wireless point-to-point communication system.

10. The communication system in accordance with any one of the preceding claims, wherein the determined characteristic of the control signalling message is at least one of the following: short data message length, total number of sites required to transmit at least one control signalling message, current application processor loading, at least one page requirement, dynamic group number assignment, dynamic group number assignment message length, number of location areas and number of sites per location area.

11. The communication system in accordance with claim 10, wherein the determination of a characteristic of the control signalling message includes determination of whether said characteristic exceeds a threshold level, and said delivery mechanism selected for forwarding the control signalling messages is selected in response to whether said characteristic exceeds said threshold level.

12. The communication system in accordance with claim 11, wherein the threshold level is pre-defined, user-definable or dynamically adapted in response to at least one network operating condition.

13. The communication system in accordance with any one of claim 11 or claim 12, wherein the threshold level is a function of at least one of: slot size, data size, short data message delivery header size.

14. The communication system in accordance with any one of claims 10 to 12, wherein the at least one page requirement is a function of at least one of: page message size, page response size.

15. A base transceiver station adapted to operate in the communication system of any one of claims 1 to 14.

16. A mobile or fixed dispatcher station adapted to operate in the communication system of any one of claims 1 to 14.

17. A method of delivering at least one control signalling message in a communication system (10, 162), where the communication system comprises a plurality of base transceiver stations (22-32) providing communication links to a plurality of mobile stations (12-16), the communication system (10, 162) having a processor (72), the method comprising a step of:

receiving (252) at least one control signalling message to be forwarded to at least one addressed mobile station;

the method **characterised by** the steps of:

determining, by the processor (72), a characteristic of the control signalling message to be delivered; and selecting (254) a delivery mechanism for delivering the control signalling message to at least one mobile station based on said characteristic.

18. The method of delivering at least one control signalling message in accordance with claim 17, the method further **characterised by** said at least one control signalling message being at least one individually or group-addressed short data message and said delivery mechanism for forwarding said at least one individually or group-addressed short data message includes at least one of the following steps:

delivering said at least one individually or group-addressed short data message to a number of location areas; or
paging at least one mobile station; and
delivering said at least one individually or group-addressed short data message, in response to a page acknowledgement from the at least one mobile station.

19. The method of delivering at least one control signalling message in accordance with claim 17 or 18, wherein the step of determining a characteristic of the control signalling message includes determining at least one of the following: short data message length, total number of sites required to transmit short data message, current application processor loading, at least one page requirement, dynamic group number assignment, dynamic group number assignment message length, number of location areas and number of sites per location area.

*FIG.1*

## FIG.2

**PAGE AND DELIVER**

LOCATION REGISTER *70* — DAP APPLICATION PROCESSOR *72*

PAGE REQUEST →
PAGE RESPONSE ←
DELIVERY →

BASE SITE *22-32*

PAGE →
ACK ←
DELIVERY →

MOBILE SUB. *12-16*

**FLOODING ALL LAs**

LOCATION REGISTER *70* — DAP APPLICATION PROCESSOR *72*

DELIVERY →

BASE SITE *22-32*

DELIVERY →

MOBILE SUB. *12-16*

## FIG.3

**PAGE AND DELIVER**

LOCATION REGISTER *70* — DAP APPLICATION PROCESSOR *72*

DELIVERY →

BASE SITE *22-32*

PAGE →
ACK ←
DELIVERY →

MOBILE SUB. *12-16*

**FLOODING ALL LAs**

LOCATION REGISTER *70* — DAP APPLICATION PROCESSOR *72*

DELIVERY →

BASE SITE *22-32*

DELIVERY →

MOBILE SUB. *12-16*

FIG.4

*250* IDLE

*252* SEND GROUP DATA REQUEST

*FIG.5*

*254* AUTO FLOODING OF DATA?

YES

NO

*260* PAGE DECISION

*256* DATA GROUP

*262* PAGE?

NO

YES

*258* IDLE

*264* DELIVER GROUP DATA

*266* PAGE

*258* IDLE

*258* IDLE

*266* PAGE

*FIG.6*

*268* SEND GROUP DATA REQUEST

*270* START PAGE TIMER

*272* WAIT FOR PAGE RESPONSE

*274* PAGE RESPONSE

*280* PAGE TIMER EXPIRES

*276* LOG SECTOR/SITE INFO.

*282* RESET PAGE TIMER

*278* DELIVER GROUP DATA

⊗

15

*260*

PAGE DECISION

*290*

USER
DATA LENGTH <
FLOODING THRESHOLD
$F_T$?

YES

NO

*292*

LOCALIZATION
FRACTION < 0.5

YES

NO

*294*

DAP
CPU LOADING >
BCLP%

YES

NO

*298* ⊗ FLOOD DLAS

*296* ⊗ PAGE MOBILE

# FIG.7